# EUROPEAN PATENT SPECIFICATION

(11) **EP 4 580 235 B1**
(45) Date of publication and mention of the grant of the patent: **10.06.2026**
(21) Application number: 23870616.2
(22) Date of filing: 22.09.2023
(51) Int. Cl.: H04W 76/14, H04W 84/18, H04W 12/50, H04W 12/06, H04W 84/12

(54) **LOCAL AREA NETWORK COMMUNICATION METHOD, ELECTRONIC DEVICE, VEHICLE, SYSTEM, AND MEDIUM**
VERFAHREN ZUR KOMMUNIKATION IN EINEM LOKALEN NETZWERK, ELEKTRONISCHE VORRICHTUNG, FAHRZEUG, SYSTEM UND MEDIUM
PROCÉDÉ DE COMMUNICATION DE RÉSEAU LOCAL, DISPOSITIF ÉLECTRONIQUE, VÉHICULE, SYSTÈME ET SUPPORT

(30) Priority: 27.09.2022 CN 202211180771
(43) Date of publication of application: 02.07.2025
(73) Proprietor: BYD Company Limited, Shenzhen, Guangdong 518118 (CN)
(72) Inventor: SUN, Xiaoqi, Shenzhen, Guangdong 518118 (CN); ZHENG, Wei, Shenzhen, Guangdong 518118 (CN); TAN, Kai, Shenzhen, Guangdong 518118 (CN)
(74) Representative: Taor, Simon Edward William
(86) International application number: PCT/CN2023/120601
(87) International publication number: WO 2024/067385

(56) References cited:
- WO-A1-2020/177254
- CN-A- 111 601 120
- CN-A- 111 601 120
- CN-A- 112 436 950
- CN-A- 112 436 950
- CN-A- 112 929 988
- CN-A- 112 929 988

## Description

### FIELD

The present disclosure relates to a communication method for a local area network (LAN), an electronic device, a vehicle, a system, and a medium.

### BACKGROUND

In the related art, a device may be automatically added to a wireless network through Wi-Fi protected setup (WPS), so as to realize establishment and access of a wireless local area network (LAN). However, since a wireless signal has a characteristic of openness, the solution leads to a great security risk during wireless LAN connection.

CN112929988 discloses a vehicle-mounted equipment pairing method and device, electronic equipment and a storage medium. The method comprises the following steps: sending a service set identifier and a password of a wireless access point provided by first vehicle-mounted equipment to second vehicle-mounted equipment through wired communication; establishing wireless connection with the second vehicle-mounted equipment in response to a wireless connection request sent by the second vehicle-mounted equipment according to the service set identifier and the password of the wireless access point; and pairing with the second vehicle-mounted equipment through the wireless connection.

### SUMMARY

Embodiments of the present disclosure provide a communication method for a local area network (LAN), an electronic device, a vehicle, a system, and a medium, which may resolve problems such as a great security risk during wireless LAN connection in the related art.

According to an aspect, a communication method for a LAN applied to a first device is provided as set out in claim 1. Additional features are set out in claims 2 to 5.

According to an aspect, a communication method for a LAN applied to a second device is provided as set out in claim 6.

According to an aspect, an electronic device is provided as set out in claim 7.

According to an aspect, a vehicle is provided as set out in claim 8.

According to an aspect, a communication system for a LAN is provided as set out in claim 9. Additional features are provided in claims 10 to 13.

According to an aspect, a computer-readable storage medium is provided as set out in claim 14.

In some embodiments of the present disclosure, after at least one second device connected to the first device by means of the preset wired communication mode is obtained, initial hotspot information of the wireless access hotspot is sent to any second device by means of the preset wired communication mode. The initial hotspot information is used for providing any second device with authentication information for accessing the wireless access hotspot. The first device and the second device establish a wireless LAN connection according to the initial hotspot information. By means of the above communication method for a LAN of the present disclosure, automatic establishment of the wireless LAN may be implemented. In addition, during the automatic establishment of the wireless LAN of the present disclosure, the first device is required to provide the second device with authentication information for accessing the wireless access hotspot (such as the initial hotspot information of the wireless access hotspot) by means of the preset wired communication mode. Therefore, the communication method for a LAN in the present disclosure is safer and more convenient.

### BRIEF DESCRIPTION OF THE DRAWINGS

To describe the technical solutions of the embodiments of this application more clearly, the following briefly describes the accompanying drawings required for describing the embodiments of the present disclosure. Apparently, the accompanying drawings in the following description show merely some embodiments of the present disclosure, and a person of ordinary skill in the art may still derive other accompanying drawings from these accompanying drawings without creative efforts.
FIG. 1 is a flowchart of a communication method for a local area network (LAN) according to an embodiment of the present disclosure.
FIG. 2 is a flowchart of a communication method for a LAN according to another embodiment of the present disclosure.
FIG. 3 is a flowchart of a communication method for a LAN according to still another embodiment of the present disclosure.
FIG. 4 is a flowchart of a communication method for a LAN according to yet another embodiment of the present disclosure.

### DETAILED DESCRIPTION

The technical solutions in embodiments of the present disclosure are clearly and completely described below with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

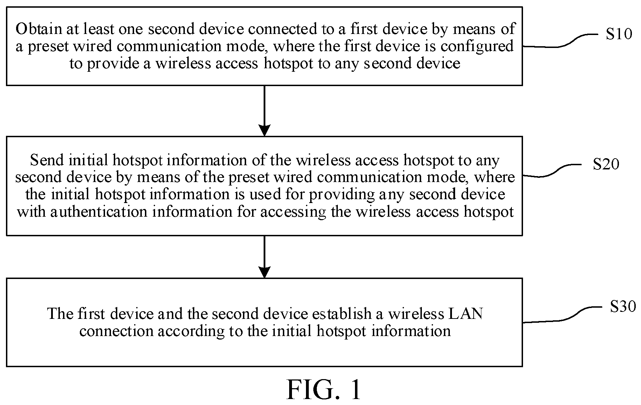

In an embodiment, as shown in FIG. 1, a communication method for a local area network (LAN) is provided, which is applied to a first device. The method includes the following steps S10-S30.

S 10: At least one second device connected to a first device by means of a preset wired communication mode is obtained. The first device is configured to provide a wireless access hotspot to any second device. It may be understood that in a vehicle, the first device and the second device are wiredly interconnected by means of the preset wired communication mode, so as to provide a hotspot information transmission channel between the wireless access hotspot of the first device and the second device. The preset wired communication mode includes one or more of Ethernet communication, controller area network (CAN) bus communication, and local interconnect network (LIN) communication. Specifically, after the first device is turned on, the first device first actively obtains connection information of the preset wired communication mode, to determine whether the second device connected to the first device by means of the preset wired communication mode currently exists. If it is determined that the second device connected to the first device by means of the preset wired communication mode currently exists, the first device automatically turns on the wireless access hotspot to which the first device belongs, so as to realize automatic establishment of a wireless LAN through the wireless access hotspot. If it is determined that no second device connected to the first device by means of the preset wired communication mode currently exists, the wireless access hotspot is not turned on.

S20: Initial hotspot information of the wireless access hotspot is sent to any second device by means of the preset wired communication mode. The initial hotspot information is used for providing any second device with authentication information for accessing the wireless access hotspot. The initial hotspot information includes, but is not limited to, a user name, a password, and a wireless network encryption mode. In the step, an action of sending the initial hotspot information to the second device by the first device may be actively or regularly sent to any second device after a user triggers a preset button. Alternatively, after the first device receives a first hotspot connection request sent by the second device by means of the preset wired communication mode, the initial hotspot information is fed, by means of the preset wired communication mode, back to the second device that sends the first hotspot connection request. It may be understood that the wireless access hotspot of the first device is used as a hotspot of the wireless LAN. After the wireless access hotspot is automatically turned on and accessed, the first device monitors information sent by means of the preset wired communication mode. For example, when the preset wired communication mode is a connection by a CAN bus, a CAN message sent through the CAN bus is monitored. It may be understood that if the first device monitors the first hotspot connection request sent by the second device by means of the preset wired communication mode (the first hotspot connection request is used for requesting to obtain the initial hotspot information of the wireless access hotspot), the initial hotspot information currently set by the wireless access hotspot is sent to the second device by means of the preset wired communication mode. In the present disclosure, after each second device on the vehicle is turned on, the first hotspot connection request is first actively sent to the first device by means of the preset wired communication mode, and the hotspot information sent by the first device is simultaneously monitored (such as the foregoing initial hotspot information or updated hotspot information mentioned later). It may be understood that the initial hotspot information of the first device is directly sent to the second device by means of the preset wired communication mode, that is, a wired transmission medium. Therefore, a security issue that may be caused by openness of wireless transmission during the wireless transmission is prevented from occurring.

S30: The first device and the second device establish a wireless LAN connection according to the initial hotspot information. Specifically, step S30 includes the following step. The first device and the second device that sends a first hotspot connection request or the second device that responds to the initial hotspot information establish the wireless LAN connection according to the initial hotspot information. In other words, the second device that establishes the wireless LAN connection with the first device can only be a second device that sends the first hotspot connection request and then obtains the initial hotspot information fed back by the second device. Alternatively, the second device is a second device that directly receives the initial hotspot information sent by the first device and responds to the initial hotspot information.

It may be understood that after the second device receives the initial hotspot information sent by the first device, the second device establishes the wireless LAN connection with the first device through the user name, the password, and the wireless network encryption mode included in the initial hotspot information. In the automatic establishment process of the foregoing wireless LAN, an access point of the wireless LAN is a wireless access hotspot of the first device. Therefore, the first device serves as a manager of the wireless LAN, and the second device connected to the first device by means of the preset wired communication mode is a workstation of the wireless LAN, which cooperates to participate in management of the wireless LAN.

The first device directly transmits the user name, the password, and the wireless network encryption mode in the initial hotspot information to the second device by means of the preset wired communication mode, and then implements the establishment of the wireless LAN according to the transmitted initial hotspot information. In the foregoing solution, in addition to ensuring information security, the wireless network encryption mode in the initial hotspot information transmitted by the first device is not limited. For example, the wireless network encryption mode may be a secure WPA2 (WPA being a primary Wi-Fi encryption and authentication mode provided by Wi-Fi Alliance) or WPA3 encryption mode, and may also be a Wi-Fi encryption mode conforming to China Compulsory Certification (CCC) requirements. Compared with a solution in which one encryption mode must be fixedly used and hotspot information is not allowed to be changed at will, the solution provided in the foregoing embodiments of the present disclosure allows setting the wireless network encryption mode in the initial hotspot information on demand, as long as the first device sends the initial hotspot information to each second device after the setting. Then the second device and the first device may be allowed to establish the wireless LAN according to the foregoing set wireless network encryption mode. In this way, the present disclosure may support automatic establishment of a LAN of any wireless network encryption type, which greatly improves scalability of the wireless network encryption mode and facilitates adaptation to updating of an encryption technology. Similarly, the user name and the password in the initial hotspot information of the present disclosure may also be set as required, rather than being generated only by WPS or a vehicle identification number (VIN). Therefore, the user name and the password in the present disclosure may also be set as required, which is convenient to operate and improves user experience.

In the foregoing embodiments of the present disclosure, by means of the communication method for a LAN of the present disclosure, automatic establishment of the wireless LAN may be implemented. In addition, during the automatic establishment of the wireless LAN of the present disclosure, the first device is required to provide the second device with authentication information for accessing the wireless access hotspot (such as the initial hotspot information of the wireless access hotspot) by means of the preset wired communication mode. Therefore, the communication method for a LAN in the present disclosure is safer and more convenient. In addition, after the first device is turned on, if it is determined that the second device connected to the first device by means of the preset wired communication mode exists, the wireless access hotspot of the first device is turned on. After the first device receives the first hotspot connection request sent by the second device by means of the preset wired communication mode, the first device may send, by means of the preset wired communication mode, the initial hotspot information (including the user name, the password, and the wireless network encryption mode) to each second device connected to the first device by means of the preset wired communication mode, and then cause the second device to establish the wireless LAN connection with the first device by means of any set wireless network encryption mode (with any type of wireless network encryption mode being supported). In other words, through the foregoing communication method for a LAN of the present disclosure, the automatic establishment of the wireless LAN may be implemented, and the wireless network encryption mode of the present disclosure is not limited. Therefore, the automatic establishment process of the wireless LAN of the present disclosure is safer, more convenient, and easier to cope with and support complex and diverse wireless network encryption modes.

In an embodiment, after step S30, that is, after the first device and the second device establish the wireless LAN connection according to the initial hotspot information, the method further includes the following step.

It is determined whether a hotspot information modification request exists. The hotspot information modification request includes at least one of user name modification information, password modification information, and wireless network encryption mode modification information. The hotspot information modification request includes at least one of user name modification information, password modification information, or wireless network encryption mode modification information. In the present disclosure, the hotspot information modification request may be sent by the second device by means of the preset wired communication mode, or may be directly generated after the current hotspot information is modified by the first device. In this embodiment, the hotspot information of the first device (for example, the initial hotspot information or the updated hotspot information after the update may be modified) can be modified through a user interface of the first device or the second device. After the user modifies the initial hotspot information through the user interface of one second device, the hotspot information modification request is sent to the first device by means of the preset wired communication mode. In this case, the first device may determine, after receiving the hotspot information modification request, that the hotspot information modification request currently exists. However, after the user modifies the initial hotspot information through the user interface of the first device, the hotspot information modification request is directly generated. In this case, the first device may directly determine that the hotspot information modification request currently exists. It may be understood that the hotspot information modification request includes modification content edited and modified by the user in the foregoing user interface, such as one or more of the user name modification information, the password modification information, or the wireless network encryption mode modification information.

The initial hotspot information is modified into updated hotspot information according to the hotspot information modification request when a determining result is yes. It may be understood that when the first device monitors that the hotspot information modification request currently exists, the first device determines that the initial hotspot information is modified. In this case, the initial hotspot information is automatically modified into the updated hotspot information according to the modification content in the foregoing hotspot modification request.

The updated hotspot information is sent, by means of the preset wired communication mode, to each second device connected with the first device. Specifically, after the first device modifies the initial hotspot information into the updated hotspot information according to the hotspot information modification request, the updated hotspot information is sent, by means of the preset wired communication mode, to each second device connected to the wireless access hotspot of the first device in the wireless LAN. Then it is convenient for another second device to re-establish the wireless LAN connection with the first device according to the foregoing updated hotspot information.

The first device and the second device re-establish the wireless LAN connection according to the updated hotspot information. It may be understood that during operation of the wireless LAN, the second device enables a background thread to monitor in real time whether a new message (such as a message including the updated hotspot information) sent by the first device is transmitted by means of the preset wired communication mode, to cope with a change of the initial hotspot information of the first device. After the second device detects the updated hotspot information sent by the first device, the second device saves the updated hotspot information, and automatically establishes the LAN connection with the first device by using the user name, the password, and the wireless network encryption mode in the updated hotspot information.

In other words, in the present disclosure, the user may be allowed to modify the initial hotspot information (including the user name, the password, and the wireless network encryption mode) through the user interface of the first device or the second device. Then after the first device monitors the hotspot information modification request including the modification content, the initial hotspot information is modified into the updated hotspot information. The updated hotspot information is sent, by means of the preset wired communication mode, to each second device connected to the first device. Then after the user completes the modification of the hotspot information, re-establishment of the wireless LAN is implemented, which is convenient for use by the user.

In an embodiment, after step S30, that is, after the first device and each second device establish the wireless LAN connection according to the initial hotspot information, the method further includes the following steps.

For any second device, the first device determines whether to disconnect from the second device. In other words, after the first device and each second device establish the wireless LAN connection according to the initial hotspot information, part of the second devices may be temporarily powered off or shut down due to other failures, in this case, the second device is disconnected from the first device, and after the second device is restarted, the second device may also need to re-establish a wireless LAN connection. Therefore, in this case, it needs to be first determined whether the first device is disconnected from any second device.

When the determining result is yes, current hotspot information of the wireless access hotspot is fed, by means of the preset wired communication mode, back to the second device that sends a second hotspot connection request after the first device receives a second hotspot connection request sent by the second device by means of the preset wired communication mode. In other words, after it is determined that one second device is disconnected from the first device, if the second device is restarted and needs to re-establish a wireless LAN connection with the first device, in this case, the second device sends a second hotspot connection request (the second hotspot connection request is used for requesting to obtain real-time hotspot information corresponding to the wireless access hotspot, that is, current hotspot information) to the first device by means of the preset wired communication mode. In this case, after the first device receives the second hotspot connection request sent by the second device by means of the preset wired communication mode, the current hotspot information of the wireless access hotspot is fed, by means of the preset wired communication mode, back to the second device that sends the second hotspot connection request.

The first device and the second device establish the wireless LAN connection according to the current hotspot information. In other words, after the second device receives the current hotspot information of the wireless access hotspot, the first device and the second device establish the wireless LAN connection according to the current hotspot information. In other words, after the second device receives the current hotspot information sent by the first device, the second device establishes the wireless LAN connection with the first device through the user name, the password, and the wireless network encryption mode included in the current hotspot information.

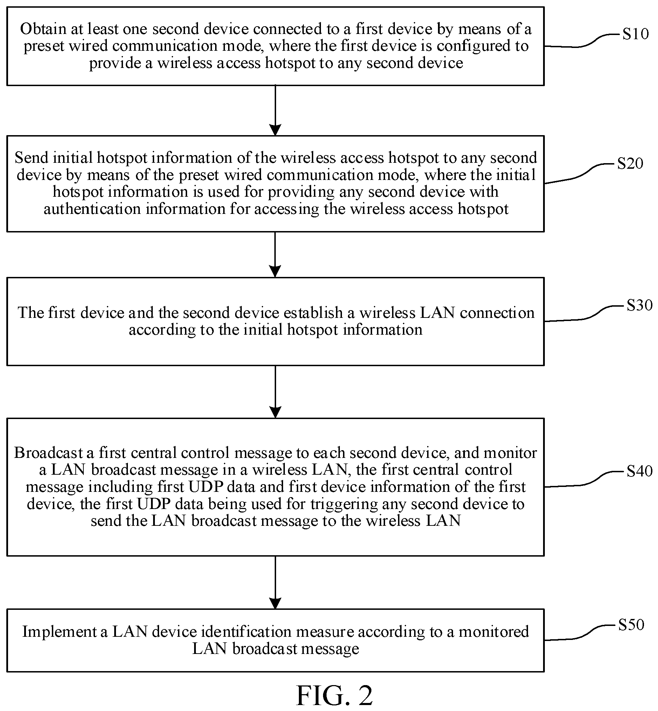

In an embodiment, as shown in FIG. 2, after step S30, that is, after the wireless access hotspot and the second device establish the wireless LAN connection according to the user name, the password, and the wireless network encryption mode, the method includes the following steps.

S40: A first central control message is broadcast to each second device, and a LAN broadcast message in a wireless LAN is monitored. The first central control message includes first user datagram protocol (UDP) data and first device information of the first device. The first UDP data is used for triggering any second device to send the LAN broadcast message to the wireless LAN. The first device, as an access point and a manager of the wireless LAN, broadcasts the first central control message to an IP layer in the wireless LAN after discovering that the second device is connected to the wireless access hotspot to which the second device belongs. A broadcast data packet of the first central control message includes the first UDP data, the first device information of the first device, and the like. Specifically, the first UDP data refers to a UDP_FIND field. The UDP_FIND field includes a first device ID (unique identifier) corresponding to the first device, and the like. The first device information includes the first device ID, a central control IP address of the first device, and the like. The first central control message may also include other contents other than the first UDP data and the first device information of the first device, for example, information such as a LAN networking status (including the first device ID, a second device ID of the second device connected to the first device, a quantity of devices, and the like), a parameter such as content sharing permission between devices, a sub-LAN identifier, and the like.

However, after the wireless access hotspot establishes the wireless LAN connection with the second device, the first device broadcasts the first central control message to the IP layer in the wireless LAN, and further monitors the LAN broadcast message in the wireless LAN. In other words, the LAN broadcast message broadcast by each second device is monitored. The LAN broadcast message includes, but is not limited to, a first device message and a second device message. The first device message refers to a message broadcast by the second device as a reply after the second device receives the first central control message sent by the first device. In other words, before the first device sends the first central control message, the second device that sends the first device message is continuously in a power-on state and is connected to the first device by means of the preset wired communication mode. In this way, the first central control message may be received. However, the second device message refers to a message that is broadcast for the first time after the second device and the first device establish the wireless LAN connection. In other words, before the first device sends the first central control message, the second device that sends the second device message is in a shutdown state due to a failure or power failure, and is not turned on until the first device sends the first central control message, and establishes the wireless LAN connection with the wireless access hotspot of the first device by means of the preset wired communication mode. In this case, since the second device has not received the first central control message before, the second device needs to re-request to obtain the first device information of the first device by actively broadcasting the second device message (the second device message includes second UDP data and second device information of the second device) and request to obtain the second device information of another second device that receive the second device message after the second device establishes the wireless network connection with the wireless access hotspot. It may be understood that the first device that receives the second device message broadcasts the first device information as a reply, and the second device that receives the second device message also broadcasts the second device information as a reply. Then after the second device that broadcasts the second device message receives each device information (the first device information and the second device information) broadcast as a reply, the device information is to be added to a LAN device list (that is, a second LAN device list mentioned below) corresponding to a current device.

S50: A LAN device identification measure is implemented according to a monitored LAN broadcast message. In other words, different LAN device identification measures are implemented according to differences of the foregoing received LAN broadcast messages.

In an embodiment, the LAN broadcast message includes a first device message broadcast by the second device as a reply after the second device receives the first central control message. The first device message includes second device information of the second device (the second device information includes a second device ID of the second device, a device IP address, and the like). Further, step S50 that the LAN device identification measure is implemented according to the monitored LAN broadcast message includes the following step. The second device information included in the first device message is added to a first LAN device list if the first device message is monitored. The first LAN device list includes the first device information of the first device and second device information of each second device that establishes the wireless LAN connection with the first device. In other words, after the first device starts monitoring and detection of the second device in the wireless LAN in step S40 (the first central control message is broadcast to the IP layer in the wireless LAN, and the LAN broadcast message in the wireless LAN is monitored), the first device message is broadcast as a reply if the second device in the wireless LAN monitors the UDP_FIND field in the first central control message. However, the first device is to save the second device information therein to the first LAN device list after receiving the first device message.

In another embodiment, the LAN broadcast message includes a second device message that is broadcast for a first time after the second device establishes the wireless LAN connection with the first device. The second device message includes second UDP data and the second device information of the second device. Further, step S40 in which the LAN device identification measure is implemented according to the monitored LAN broadcast message includes the following steps. The second device information included in the second device message is added to a first LAN device list if the second device message is monitored. A second central control message is broadcast as a reply to the second device that broadcasts the second device message, to cause the second device to add the first device information of the first device included in the second central control message to a second LAN device list. The first LAN device list and the second LAN device list both include the first device information of the first device and the second device information of each second device that establishes the wireless LAN connection with the first device. In other words, after the first device starts monitoring and detection of the second device in the wireless LAN in step S40 (the first central control message is broadcast to the IP layer in the wireless LAN, and the LAN broadcast message in the wireless LAN is monitored), the first device directly starts broadcasting the second device message if the second device in the wireless LAN has just been turned on and has not received the first central control message. However, the first device is also to save the second device information in the foregoing second device message to the first LAN device list. It may be understood that the first device that receives the second device message broadcasts the first device information as a reply, and the second device that receives the second device message also broadcasts the second device information as a reply. Then after the second device that broadcasts the second device message receives each device information (the first device information and the second device information) broadcast as a reply, the device information is to be added to a LAN device list (that is, a second LAN device list mentioned below) corresponding to a current device.

In the present disclosure, the first LAN device list and the second LAN device list both include the first device information of the first device and the second device information of each second device that establishes the wireless LAN connection with the first device. In this embodiment, the first LAN device list and the second LAN device list may refer to different lists respectively stored in the first device and the second device. Therefore, through the foregoing method, synchronization of data in the first LAN device list and the second LAN device list may be maintained. Through the solution in this embodiment, identification and management of each device in the wireless LAN may be implemented through the first LAN device list (and the second LAN device list) at the IP layer, thereby providing an accurate service for another network requirement such as upper-level https. In addition, the present disclosure may implement accurate identification of a LAN device that is not oriented to a specific service. In other words, each device in the wireless LAN may be quickly identified without binding to a specific service (without binding to a specific service, a mechanism for identifying a device does not depend on provision of a service) through a customized UDP_FIND field and a broadcast reply mechanism, to provide basic services for more business scenarios and accurate identification in the wireless LAN. The device in the present disclosure is convenient for business expansion and accurate identification. It may be understood that, in some embodiments, the first LAN device list and the second LAN device list may also refer to a same list stored in a certain device that can be retrieved by the first device and the second device. In other words, the entire wireless LAN may share a unified LAN device list.

In an embodiment, after step S50, that is, after the LAN device identification measure is implemented according to the monitored LAN broadcast message, the method includes the following step.

Change information of the second devices in the first LAN device list is monitored. The first LAN device list includes the first device information of the first device and the second device information of each second device that establishes the wireless LAN connection with the first device. In other words, the first device further needs to monitor the change information of the second device connected to the first device through the wireless access hotspot. The change information may include a change in a quantity of the second devices currently connected to the first device in real time through the wireless access hotspot and specific device information. In this way, it may be detected through the change information whether the second device having a certain device IP address joins or exits the wireless LAN. In the foregoing embodiments, a corresponding LAN device identification measure has actually been described when the second device joins the wireless LAN. Therefore, in this embodiment, only a case where the second device exiting the wireless LAN exists is described (in other words, the change information represents that the second device removed from the wireless LAN connection with the first device is newly added currently).

When the change information represents that the second device that is removed from the wireless LAN connection to the first device is newly added currently, the second device that is removed from the wireless LAN connection to the first device is deleted from the first LAN device list, to update the first LAN device list. In other words, when the change information represents that the second device removed from the wireless LAN connection with the first device is newly added currently, it indicates that the second device that exits the wireless LAN is newly added. In this case, an entry corresponding to the second device may be deleted from the first LAN device list.

The change information is synchronously broadcast to each second device that establishes the wireless LAN connection with the first device, to cause the second device to synchronously delete, from the second LAN device list according to the change information, the second device that is removed from the wireless LAN connection to the first device. In other words, after the foregoing second device exiting the wireless LAN is deleted from the first LAN device list, another online second device in the wireless LAN that currently exists in real time may be further synchronously instructed, in a form of wireless LAN broadcasting, to delete the corresponding entry of the second device exiting the wireless LAN from the second LAN device list according to the foregoing change information.

According to the foregoing communication method for a LAN in the present disclosure, each device in the wireless LAN may be quickly identified without binding to the specific service (without binding to the specific service, a mechanism for identifying the device does not depend on the provision of the service), to provide a basic service for more business scenarios and accurate identification in the wireless LAN. The method is a method for accurate identification of the LAN device that is not oriented to the specific service. The foregoing communication method for a LAN is applicable to an on-board field.

It should be understood that a magnitude of the sequence number of steps in the above embodiments does not mean the order of execution, and the order of execution of each process should be determined by its function and internal logic, and should not constitute any limitation on the implementation process of the embodiments of the present disclosure.

The present disclosure further provides an electronic device. The electronic device is configured to perform the foregoing communication method for a LAN. Specifically, when the electronic device is a first device, the first device is configured to perform the following steps.

At least one second device connected to a first device by means of a preset wired communication mode is obtained. The first device is configured to provide a wireless access hotspot to any second device.

Initial hotspot information of the wireless access hotspot is sent to any second device by means of the preset wired communication mode. The initial hotspot information is used for providing any second device with authentication information for accessing the wireless access hotspot.

The first device and the second device establish a wireless LAN connection according to the initial hotspot information.

In an embodiment, that the first device and the second device establish a wireless LAN connection according to the initial hotspot information includes the following step.

The first device and the second device that sends a first hotspot connection request or the second device that responds to the initial hotspot information establish the wireless LAN connection according to the initial hotspot information.

In an embodiment, after the first device and the second device establish the wireless LAN connection according to the initial hotspot information, the method further includes the following steps.

**It** is determined whether a hotspot information modification request exists. The hotspot information modification request includes at least one of user name modification information, password modification information, and wireless network encryption mode modification information.

The initial hotspot information is modified into updated hotspot information according to the hotspot information modification request when a determining result is yes.

The updated hotspot information is sent, by means of the preset wired communication mode, to each second device connected with the first device.

The first device and the second device re-establish the wireless LAN connection according to the updated hotspot information.

In an embodiment, after the first device and the second device establish the wireless LAN connection according to the initial hotspot information, the method further includes the following steps.

A first central control message is broadcast to each second device, and a LAN broadcast message in a wireless LAN is monitored. The first central control message includes first UDP data and first device information of the first device. The first UDP data is used for triggering any second device to send the LAN broadcast message to the wireless LAN.

A LAN device identification measure is implemented according to a monitored LAN broadcast message.

In an embodiment, the LAN broadcast message includes a first device message broadcast by the second device as a reply after the second device receives the first central control message. The first device message includes second device information of the second device.

That a LAN device identification measure is implemented according to a monitored LAN broadcast message includes the following step.

The second device information included in the first device message is added to a first LAN device list if the first device message is monitored. The first LAN device list includes the first device information of the first device and second device information of each second device that establishes the wireless LAN connection with the first device.

In an embodiment, the LAN broadcast message includes a second device message that is broadcast for a first time after the second device establishes the wireless LAN connection with the first device. The second device message includes second UDP data and the second device information of the second device.

That a LAN device identification measure is implemented according to a monitored LAN broadcast message includes the following step.

The second device information included in the second device message is added to a first LAN device list if the second device message is monitored. A second central control message is broadcast as a reply to the second device that broadcasts the second device message, to cause the second device to add the first device information of the first device included in the second central control message to a second LAN device list. The first LAN device list and the second LAN device list both include the first device information of the first device and the second device information of each second device that establishes the wireless LAN connection with the first device.

**In** an embodiment, after the LAN device identification measure is implemented according to the monitored LAN broadcast message, the method further includes the following steps.

Change information of the second devices in the first LAN device list is monitored.

When the change information represents that the second device that is removed from the wireless LAN connection to the first device is newly added currently, the second device that is removed from the wireless LAN connection to the first device is deleted from the first LAN device list, to update the first LAN device list.

The change information is synchronously broadcast to each second device that establishes the wireless LAN connection with the first device, to cause the second device to synchronously delete, from the second LAN device list according to the change information, the second device that is removed from the wireless LAN connection to the first device.

In an embodiment, after the first device and each second device establish the wireless LAN connection according to the initial hotspot information, the method further includes the following steps.

For any second device, the first device determines whether to disconnect from the second device.

When the determining result is yes, current hotspot information of the wireless access hotspot is fed, by means of the preset wired communication mode, back to the second device that sends a second hotspot connection request after the first device receives a second hotspot connection request sent by the second device by means of the preset wired communication mode.

The first device and the second device establish the wireless LAN connection according to the current hotspot information.

In an embodiment, the preset wired communication mode includes one or more of Ethernet communication, CAN bus communication, and LIN communication.

Specific arrangements of the electronic device in the present disclosure are in one-to-one correspondence with those in the foregoing communication method for a LAN. Details are not described herein again. All or some of modules in the foregoing electronic device may be implemented by software, hardware, or a combination thereof. The foregoing modules may be built in or independent of the electronic device in a form of hardware, or may be stored in the electronic device in a form of software, so that the electronic device invokes and performs an operation corresponding to each of the foregoing modules.

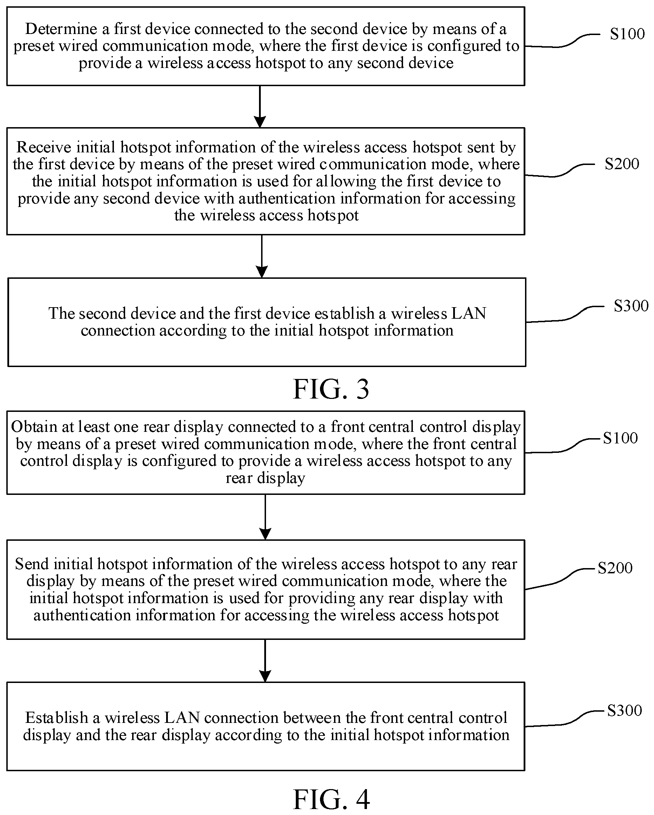

As shown in FIG. 3, the present disclosure further provides a communication method for a LAN, applied to a second device. The method includes the following steps.

S100: A first device connected to the second device by means of a preset wired communication mode is determined. The first device is configured to provide a wireless access hotspot to any second device.

S200: Initial hotspot information of the wireless access hotspot sent by the first device by means of the preset wired communication mode is received. The initial hotspot information is used for allowing the first device to provide any second device with authentication information for accessing the wireless access hotspot.

S300: The second device and the first device establish a wireless LAN connection according to the initial hotspot information.

In an embodiment, after step S300, the method further includes the following steps.

After the first device modifies the initial hotspot information into updated hotspot information according to a hotspot information modification request, the second device and the second device re-establish the wireless LAN connection according to the updated hotspot information if the updated hotspot information sent by the first device by means of the preset wired communication mode is received. The hotspot information modification request includes at least one of user name modification information, password modification information, and wireless network encryption mode modification information.

Further, after step S300, the method further includes the following steps.

A second hotspot connection request is sent to the first device by means of the preset wired communication mode. After current hotspot information of the wireless access hotspot fed back by the first device by means of the preset wired communication mode is received, the second device and the first device establish the wireless LAN connection according to the current hotspot information.

In an embodiment, after step S300, the method further includes the following steps.

After a first central control message broadcast by the first device is received, a first device message is broadcast as a reply, so that after the first device monitors the first device message, second device information of the second device included in the first device message is added to a first LAN device list. The first central control message includes first UDP data and first device information of the first device. The first UDP data is used for triggering any second device to send the LAN broadcast message to the wireless LAN. The first LAN device list includes the first device information of the first device and the second device information of each second device that establishes the wireless LAN connection with the first device.

In an embodiment, after step S300, the method further includes the following steps.

A second device message is broadcast, so that the first device adds the second device information of the second device included in the second device message to the first LAN device list after monitoring the second device message. The second device message refers to a message that is broadcast for a first time after the second device and the first device establish the wireless LAN connection. The second device message includes second UDP data and the second device information. The first LAN device list includes the first device information of the first device and the second device information of each second device that establishes the wireless LAN connection with the first device.

A second central control message broadcast by the first device as a reply after the first device monitors the second device message is received, and the first device information of the first device included in the second central control message is added to a second LAN device list. The second LAN device list includes the first device information of the first device and the second device information of each second device that establishes the wireless LAN connection with the first device.

In an embodiment, after step S300, the method further includes the following steps.

Change information of the second device in the first LAN device list synchronously broadcast by the first device after the monitoring is received. The first LAN device list includes the first device information of the first device and the second device information of each second device that establishes the wireless LAN connection with the first device. When the change information represents that the second device removed from the wireless LAN connection with the first device is newly added currently, the second device removed from the wireless LAN connection with the first device is deleted from the first LAN device list, and then synchronous broadcasting is performed.

The second device removed from the wireless LAN connection with the first device is synchronously deleted from the second LAN device list according to the change information. The second LAN device list includes the first device information of the first device and the second device information of each second device that establishes the wireless LAN connection with the first device.

The communication method for a LAN applied to the second device in the foregoing embodiments of the present disclosure is in one-to-one correspondence with the communication method for a LAN applied to the first device in the present disclosure. Details are not described herein again. By means of the above communication method for a LAN of the present disclosure, automatic establishment of the wireless LAN may be implemented. In addition, during the automatic establishment of the wireless LAN of the present disclosure, the first device is required to provide the second device with authentication information for accessing the wireless access hotspot (such as the initial hotspot information of the wireless access hotspot) by means of the preset wired communication mode. Therefore, the communication method for a LAN in the present disclosure is safer and more convenient.

The present disclosure further provides an electronic device. The electronic device is configured to perform the foregoing communication method for a LAN. Specifically, when the electronic device is the second device, the second device is configured to perform the following steps.

A first device connected to the second device by means of a preset wired communication mode is determined. The first device is configured to provide a wireless access hotspot to any second device.

Initial hotspot information of the wireless access hotspot sent by the first device by means of the preset wired communication mode is received. The initial hotspot information is used for allowing the first device to provide any second device with authentication information for accessing the wireless access hotspot.

The second device and the first device establish a wireless LAN connection according to the initial hotspot information.

Specific arrangements of the electronic device in the present disclosure are in one-to-one correspondence with those in the foregoing communication method for a LAN applied to the second device. Details are not described herein again. All or some of modules in the foregoing electronic device may be implemented by software, hardware, or a combination thereof. The foregoing modules may be built in or independent of the electronic device in a form of hardware, or may be stored in the electronic device in a form of software, so that the electronic device invokes and performs an operation corresponding to each of the foregoing modules.

As shown in FIG. 4, the present disclosure further provides a communication method for a LAN. The method includes the following steps.

At least one rear display connected to a front central control display by means of a preset wired communication mode is obtained. The front central control display is configured to provide a wireless access hotspot to any rear display.

Initial hotspot information of the wireless access hotspot is sent to any rear display by means of the preset wired communication mode. The initial hotspot information is used for providing any rear display with authentication information for accessing the wireless access hotspot.

The front central control display and the rear display establish the wireless LAN connection according to the initial hotspot information.

The communication method for a LAN applied to the second device in the foregoing embodiments of the present disclosure is in one-to-one correspondence with the communication method for a LAN applied to the first device. Details are not described herein again. Specifically, the front central control display may be regarded as the first device, and the rear display may be regarded as the second device. By means of the above communication method for a LAN of the present disclosure, automatic establishment of the wireless LAN may be implemented. In addition, during the automatic establishment of the wireless LAN of the present disclosure, the front central control display and the rear display are required to provide the second device with authentication information for accessing the wireless access hotspot (such as the initial hotspot information of the wireless access hotspot) by means of the preset wired communication mode. Therefore, the communication method for a LAN in the present disclosure is safer and more convenient.

It should be understood that a magnitude of the sequence number of steps in the above embodiments of the present disclosure does not mean the order of execution, and the order of execution of each process should be determined by its function and internal logic, and should not constitute any limitation on the implementation process of the embodiments of the present disclosure.

The present disclosure further provides an electronic device. The electronic device is configured to perform the foregoing communication method for a LAN. In an embodiment, the electronic device is a display. Specifically, the electronic device may be an on-board front central control display (corresponding to the first device) arranged on a vehicle. The electronic device may also be a different rear display (corresponding to the second device) arranged on the vehicle. During automatic establishment of an on-board wireless LAN through the communication method for a LAN, an access point of the on-board wireless LAN is the wireless access hotspot of the foregoing first device (such as the front central control display). Therefore, the first device serves as a manager of the on-board wireless LAN, and the second device (such as a different rear display) connected to the first device by means of the preset wired communication mode (such as the CAN bus) is a workstation of the on-board wireless LAN. The second device may cooperate to participate in the management of the on-board wireless LAN according to the foregoing communication method for a LAN.

Specific arrangements of the electronic device in the present disclosure are in one-to-one correspondence with those in the foregoing communication method for a LAN. Details are not described herein again. All or some of modules in the foregoing electronic device may be implemented by software, hardware, or a combination thereof. The foregoing modules may be built in or independent of the electronic device in a form of hardware, or may be stored in the electronic device in a form of software, so that the electronic device invokes and performs an operation corresponding to each of the foregoing modules.

The present disclosure further provides a vehicle, including the electronic devices in the above different embodiments. It may be understood that the foregoing communication method for a LAN is applicable to an on-board field. In other words, the foregoing wireless LAN may be an on-board wireless LAN, and the foregoing electronic device may be the first device or the second device. The first device may be an on-board front central control display arranged on a vehicle. The second device may be a different rear display arranged on the vehicle. During automatic establishment of an on-board wireless LAN through the communication method for a LAN, an access point of the on-board wireless LAN is the wireless access hotspot of the foregoing first device (such as the front central control display). Therefore, the first device serves as a manager of the on-board wireless LAN, and the second device (such as a different rear display) connected to the first device by means of the preset wired communication mode (such as the CAN bus) is a workstation of the on-board wireless LAN. The second device may cooperate to participate in the management of the on-board wireless LAN according to the foregoing communication method for a LAN.

The present disclosure further provides a communication system for a LAN, including a first device and a second device. The first device is configured to perform the following steps.

At least one second device connected to a first device by means of a preset wired communication mode is obtained. The first device is configured to provide a wireless access hotspot to any second device.

Initial hotspot information of the wireless access hotspot is sent to any second device by means of the preset wired communication mode. The initial hotspot information is used for providing any second device with authentication information for accessing the wireless access hotspot.

The first device and the second device establish a wireless LAN connection according to the initial hotspot information.

The second device is configured to perform the following steps.

A first device connected to the second device by means of a preset wired communication mode is determined.

The initial hotspot information of the wireless access hotspot sent by the first device by means of the preset wired communication mode is received.

The second device and the first device establish a wireless LAN connection according to the initial hotspot information.

In an embodiment, that the first device and the second device establish a wireless LAN connection according to the initial hotspot information includes the following step.

The first device and the second device that sends a first hotspot connection request or the second device that responds to the initial hotspot information establish the wireless LAN connection according to the initial hotspot information.

In an embodiment, after the first device and the second device establish the wireless LAN connection according to the initial hotspot information, the first device is further configured to perform the following steps.

It is determined whether a hotspot information modification request exists. The hotspot information modification request includes at least one of user name modification information, password modification information, and wireless network encryption mode modification information.

The initial hotspot information is modified into updated hotspot information according to the hotspot information modification request when a determining result is yes.

The updated hotspot information is sent, by means of the preset wired communication mode, to each second device connected with the first device.

The first device and the second device re-establish the wireless LAN connection according to the updated hotspot information.

In an embodiment, after the first device and the second device establish the wireless LAN connection according to the initial hotspot information, the first device is further configured to perform the following steps.

A first central control message is broadcast to each second device, and a LAN broadcast message in a wireless LAN is monitored. The first central control message includes first UDP data and first device information of the first device. The first UDP data is used for triggering any second device to send the LAN broadcast message to the wireless LAN.

A LAN device identification measure is implemented according to a monitored LAN broadcast message.

In an embodiment, the LAN broadcast message includes a first device message broadcast by the second device as a reply after the second device receives the first central control message. The first device message includes second device information of the second device.

That a LAN device identification measure is implemented according to a monitored LAN broadcast message includes the following step.

The second device information included in the first device message is added to a first LAN device list if the first device message is monitored. The first LAN device list includes the first device information of the first device and second device information of each second device that establishes the wireless LAN connection with the first device.

In an embodiment, the LAN broadcast message includes a second device message that is broadcast for a first time after the second device establishes the wireless LAN connection with the first device. The second device message includes second UDP data and the second device information of the second device.

That a LAN device identification measure is implemented according to a monitored LAN broadcast message includes the following step.

The second device information included in the second device message is added to a first LAN device list if the second device message is monitored. A second central control message is broadcast as a reply to the second device that broadcasts the second device message, to cause the second device to add the first device information of the first device included in the second central control message to a second LAN device list. The first LAN device list and the second LAN device list both include the first device information of the first device and the second device information of each second device that establishes the wireless LAN connection with the first device.

In an embodiment, after the LAN device identification measure is implemented according to the monitored LAN broadcast message, the first device is further configured to perform the following steps.

Change information of the second devices in the first LAN device list is monitored.

When the change information represents that the second device that is removed from the wireless LAN connection to the first device is newly added currently, the second device that is removed from the wireless LAN connection to the first device is deleted from the first LAN device list, to update the first LAN device list.

The change information is synchronously broadcast to each second device that establishes the wireless LAN connection with the first device, to cause the second device to synchronously delete, from the second LAN device list according to the change information, the second device that is removed from the wireless LAN connection to the first device.

In an embodiment, after the first device and each second device establish the wireless LAN connection according to the initial hotspot information, the first device is further configured to perform the following steps.

For any second device, the first device determines whether to disconnect from the second device.

When the determining result is yes, current hotspot information of the wireless access hotspot is fed, by means of the preset wired communication mode, back to the second device that sends a second hotspot connection request after the first device receives a second hotspot connection request sent by the second device by means of the preset wired communication mode.

The first device and the second device establish the wireless LAN connection according to the current hotspot information.

In an embodiment, the preset wired communication mode includes one or more of Ethernet communication, CAN bus communication, and LIN communication.

Specific arrangements of the communication system for a LAN in the present disclosure are in one-to-one correspondence with those in the foregoing communication method for a LAN. Details are not described herein again.

The present disclosure further provides a computer-readable storage medium. The computer-readable storage medium stores a computer program. When the computer program is executed by a processor, the foregoing communication method for a LAN applied to the first device is implemented. Alternatively, when the computer program is executed by the processor, the foregoing communication method for a LAN applied to the second device is implemented.

A person of ordinary skill in the art may understand that all or some of processes of the method in the foregoing embodiments may be implemented by a computer program instructing relevant hardware. The computer program may be stored in a non-volatile computer-readable storage medium. When the computer program is executed, the processes of the foregoing method embodiments may be implemented. Any reference to the memory, storage, the database, or other media used in the embodiments provided in the present disclosure may include a non-volatile memory or a volatile memory. The non-volatile memory may include a read-only memory (ROM), a programmable ROM (PROM), an electrically programmable ROM (EPROM), an electrically erasable programmable ROM (EEPROM), or a flash memory. The volatile memory may include a random access memory (RAM) or an external cache. By way of description rather than limitation, the RAM may be obtained in multiple forms, such as a static RAM (SRAM), a dynamic RAM (DRAM), a synchronous DRAM (SDRAM), a double data rate SDRAM (DDRSDRAM), an enhanced SDRAM (ESDRAM), a synchlink DRAM (SLDRAM), a rambus direct RAM (RDRAM), a direct rambus dynamic RAM (DRDRAM), and a rambus dynamic RAM (RDRAM).

A person skilled in the art may clearly understand that for the convenience and conciseness of description, only the division of the above functional units and modules is used as an example for description. In practical application, the above functional allocation may be completed by different functional units and modules as required, that is, an internal structure of an apparatus is divided into different functional units or modules to complete all or part of the functions described above.

The foregoing embodiments are merely used for describing the technical solutions of the present disclosure, and are not intended to limit the present disclosure. Although the present disclosure is described in detail with reference to the foregoing embodiments, it should be appreciated by a person skilled in the art that, modifications may still be made to the technical solutions described in the above embodiments, or equivalent substitutions may be made to some of the technical features. However, these modifications or substitutions do not make the essence of the corresponding technical solutions depart from the scope of the technical solutions of the embodiments of the present disclosure, and all shall fall within the protection scope of the present disclosure.

## Claims

1. A communication method for a local area network, LAN, applied to a first device, the method comprising:
obtaining at least one second device connected to a first device by means of a preset wired communication mode, the first device being configured to provide a wireless access hotspot to any second device;
sending initial hotspot information of the wireless access hotspot to any second device by means of the preset wired communication mode, the initial hotspot information being used for providing any second device with authentication information for accessing the wireless access hotspot; and
establishing, by the first device and the second device, a wireless LAN connection according to the initial hotspot information;
wherein after the establishing, by the first device and the second device, a wireless LAN connection according to the initial hotspot information, the method further comprises:
broadcasting a first central control message to each second device, and monitoring a LAN broadcast message in a wireless LAN, the first central control message comprising first user datagram protocol, UDP, data and first device information of the first device, the first UDP data being used for triggering any second device to send the LAN broadcast message to the wireless LAN; and
implementing a LAN device identification measure according to a monitored LAN broadcast message.

2. The communication method for a LAN according to claim 1, wherein the establishing, by the first device and the second device, a wireless LAN connection according to the initial hotspot information comprises:
establishing, by the first device and the second device that sends a first hotspot connection request or the second device that responds to the initial hotspot information, the wireless LAN connection according to the initial hotspot information.

3. The communication method for LAN according to any of claims 1 to 2, wherein after the establishing, by the first device and the second device, a wireless LAN connection according to the initial hotspot information, the method further comprises:
determining whether a hotspot information modification request exists, wherein the hotspot information modification request comprises at least one of user name modification information, password modification information, and wireless network encryption mode modification information;
modifying the initial hotspot information into updated hotspot information according to the hotspot information modification request when a determining result is yes;
sending, by means of the preset wired communication mode, the updated hotspot information to each second device connected with the first device; and
re-establishing, by the first device and the second device, a wireless LAN connection according to the updated hotspot information.

4. The communication method for a LAN according to any of claims 1 to 3,
wherein the LAN broadcast message comprises a first device message broadcast by the second device as a reply after the second device receives the first central control message, the first device message comprising second device information of the second device; and the implementing a LAN device identification measure according to a monitored LAN broadcast message comprises: adding the second device information comprised in the first device message to a first LAN device list if the first device message is monitored, the first LAN device list comprising the first device information of the first device and second device information of each second device that establishes the wireless LAN connection with the first device; and/or
wherein the LAN broadcast message comprises a second device message that is broadcast for a first time after the second device establishes the wireless LAN connection with the first device, the second device message comprising second UDP data and the second device information of the second device; and the implementing a LAN device identification measure according to a monitored LAN broadcast message comprises: adding the second device information comprised in the second device message to a first LAN device list if the second device message is monitored, and broadcasting a second central control message as a reply to the second device that broadcasts the second device message, to cause the second device to add the first device information of the first device comprised in the second central control message to a second LAN device list, the first LAN device list and the second LAN device list both comprising the first device information of the first device and the second device information of each second device that establishes the wireless LAN connection with the first device; further optionally wherein after the implementing a LAN device identification measure according to a monitored LAN broadcast message, the method further comprises: monitoring change information of the second devices in the first LAN device list; deleting, from the first LAN device list when the change information represents that the second device that is removed from the wireless LAN connection to the first device is newly added currently, the second device that is removed from the wireless LAN connection to the first device, to update the first LAN device list; and synchronously broadcasting the change information to each second device that establishes the wireless LAN connection with the first device, to cause the second device to synchronously delete, from the second LAN device list according to the change information, the second device that is removed from the wireless LAN connection to the first device.

5. The communication method for a LAN according to any of claims 1 to 4, wherein after the establishing, by the first device and each second device, a wireless LAN connection according to the initial hotspot information, the method further comprises:
determining, by the first device for any second device, whether to disconnect from the second device;
feeding, by means of the preset wired communication mode when the determining result is yes, back current hotspot information of the wireless access hotspot to the second device that sends a second hotspot connection request after the first device receives a second hotspot connection request sent by the second device by means of the preset wired communication mode; and
establishing, by the first device and the second device, the wireless LAN connection according to the current hotspot information; and/or
wherein the preset wired communication mode comprises one or more of Ethernet communication, controller area network, CAN, bus communication, and local interconnect network, LIN, communication.

6. A communication method for a local area network, LAN, applied to a second device, the method comprising:
determining a first device connected to the second device by means of a preset wired communication mode, wherein the first device is configured to provide a wireless access hotspot to any second device;
receiving initial hotspot information of the wireless access hotspot sent by the first device by means of the preset wired communication mode, wherein the initial hotspot information is used for allowing the first device to provide any second device with authentication information for accessing the wireless access hotspot; and
establishing, by the second device and the first device, a wireless LAN connection according to the initial hotspot information;
wherein after the establishing, by the first device and the second device, a wireless LAN connection according to the initial hotspot information, the method further comprises:
receiving a first central control message from the first device, the first central control message comprising first user datagram protocol, UDP, data and first device information of the first device;
sending a LAN broadcast message to the wireless LAN in response to the first UDP data to enable the first device to implement a LAN device identification measure based on the LAN broadcast message.

7. An electronic device, configured to perform the communication method for a LAN according to any of claims 1 to 5, or configured to perform the communication method for a LAN according to claim 6;
optionally wherein the electronic device is a display.

8. A vehicle, comprising the electronic device according to claim 7.

9. A communication system for a local area network, LAN, comprising a first device and a second device, the first device being configured to perform the following steps:
obtaining at least one second device connected to a first device by means of a preset wired communication mode, the first device being configured to provide a wireless access hotspot to any second device;
sending initial hotspot information of the wireless access hotspot to any second device by means of the preset wired communication mode, the initial hotspot information being used for providing any second device with authentication information for accessing the wireless access hotspot; and
establishing, by the first device and the second device, a wireless LAN connection according to the initial hotspot information; and
the second device being configured to perform the following steps:
determining a first device connected to the second device by means of a preset wired communication mode;
receiving the initial hotspot information of the wireless access hotspot sent by the first device by means of the preset wired communication mode; and
establishing, by the second device and the first device, a wireless LAN connection according to the initial hotspot information;
wherein after the establishing, by the first device and the second device, a wireless LAN connection according to the initial hotspot information, the first device is further configured to perform the following steps:
broadcasting a first central control message to each second device, and monitoring a LAN broadcast message in a wireless LAN, the first central control message comprising first UDP data and first device information of the first device, the first UDP data being used for triggering any second device to send the LAN broadcast message to the wireless LAN; and
implementing a LAN device identification measure according to a monitored LAN broadcast message.

10. The communication system for a LAN according to claim 9, wherein the establishing, by the first device and the second device, a wireless LAN connection according to the initial hotspot information comprises: establishing, by the first device and the second device that sends a first hotspot connection request or the second device that responds to the initial hotspot information, the wireless LAN connection according to the initial hotspot information; and/or
wherein after the establishing, by the first device and the second device, a wireless LAN connection according to the initial hotspot information, the first device is further configured to perform the following steps: determining whether a hotspot information modification request exists, wherein the hotspot information modification request comprises at least one of user name modification information, password modification information, and wireless network encryption mode modification information; modifying the initial hotspot information into updated hotspot information according to the hotspot information modification request when a determining result is yes; sending, by means of the preset wired communication mode, the updated hotspot information to each second device connected with the first device; and re-establishing, by the first device and the second device, a wireless LAN connection according to the updated hotspot information.

11. The communication system for a LAN according to claim 9 or 10,
wherein the LAN broadcast message comprises a first device message broadcast by the second device as a reply after the second device receives the first central control message, the first device message comprising second device information of the second device; and the implementing a LAN device identification measure according to a monitored LAN broadcast message comprises: adding the second device information comprised in the first device message to a first LAN device list if the first device message is monitored, the first LAN device list comprising the first device information of the first device and second device information of each second device that establishes the wireless LAN connection with the first device; and/or
wherein the LAN broadcast message comprises a second device message that is broadcast for a first time after the second device establishes the wireless LAN connection with the first device, the second device message comprising second UDP data and the second device information of the second device; and the implementing a LAN device identification measure according to a monitored LAN broadcast message comprises: adding the second device information comprised in the second device message to a first LAN device list if the second device message is monitored, and broadcasting a second central control message as a reply to the second device that broadcasts the second device message, to cause the second device to add the first device information of the first device comprised in the second central control message to a second LAN device list, the first LAN device list and the second LAN device list both comprising the first device information of the first device and the second device information of each second device that establishes the wireless LAN connection with the first device; further optionally wherein after the implementing a LAN device identification measure according to a monitored LAN broadcast message, the first device is further configured to perform the following steps: monitoring change information of the second devices in the first LAN device list; deleting, from the first LAN device list when the change information represents that the second device that is removed from the wireless LAN connection to the first device is newly added currently, the second device that is removed from the wireless LAN connection to the first device, to update the first LAN device list; and
synchronously broadcasting the change information to each second device that establishes the wireless LAN connection with the first device, to cause the second device to synchronously delete, from the second LAN device list according to the change information, the second device that is removed from the wireless LAN connection to the first device.

12. The communication system for a LAN according to any of claims 9 to 11, wherein after the establishing, by the first device and each second device, a wireless LAN connection according to the initial hotspot information, the first device is further configured to perform the following steps:
determining, by the first device for any second device, whether to disconnect from the second device;
feeding, by means of the preset wired communication mode when the determining result is yes, back current hotspot information of the wireless access hotspot to the second device that sends a second hotspot connection request after the first device receives a second hotspot connection request sent by the second device by means of the preset wired communication mode; and
establishing, by the first device and the second device, the wireless LAN connection according to the current hotspot information.

13. The communication system for a LAN according to any of claims 9 to 12, wherein the preset wired communication mode comprises one or more of Ethernet communication, CAN bus communication, and LIN communication.

14. A computer-readable storage medium, storing a computer program, wherein when the computer program is executed by a processor, the communication method for a LAN according to any of claims 1 to 5 is implemented; or when the computer program is executed by the processor, the communication method for a LAN according to claim 6 is implemented.

## Patentansprüche

1. Verfahren zur Kommunikation für ein lokales Netzwerk, LAN, das auf eine erste Vorrichtung angewendet wird, das Verfahren umfassend:
Erhalten zumindest einer zweiten Vorrichtung, die mit einer ersten Vorrichtung verbunden ist, mittels eines voreingestellten drahtgebundenen Kommunikationsmodus, wobei die erste Vorrichtung konfiguriert ist, einer beliebigen zweiten Vorrichtung einen drahtlosen Zugriffs-Hotspot bereitzustellen;
Senden von anfänglichen Hotspot-Informationen des drahtlosen Zugriffs-Hotspots an eine beliebige zweite Vorrichtung mittels des voreingestellten drahtgebundenen Kommunikationsmodus, wobei die anfänglichen Hotspot-Informationen zum Bereitstellen einer beliebigen zweiten Vorrichtung mit Authentifizierungsinformationen zum Zugreifen auf den drahtlosen Zugriffs-Hotspot verwendet werden; und
Herstellen einer drahtlosen LAN-Verbindung durch die erste Vorrichtung und die zweite Vorrichtung gemäß den anfänglichen Hotspot-Informationen;
wobei nach dem Herstellen einer drahtlosen LAN-Verbindung durch die erste Vorrichtung und die zweite Vorrichtung gemäß den anfänglichen Hotspot-Informationen das Verfahren ferner Folgendes umfasst:
Senden einer ersten zentralen Steuernachricht an jede zweite Vorrichtung und Überwachen einer LAN-Broadcast-Nachricht in einem drahtlosen LAN, die erste zentrale Steuernachricht erste Benutzerdatagrammprotokoll-, UDP-, Daten und erste Vorrichtungsinformationen der ersten Vorrichtung umfassend, wobei die ersten UDP-Daten zum Auslösen einer beliebigen zweiten Vorrichtung verwendet werden, um die LAN-Broadcast-Nachricht an das drahtlose LAN zu senden; und
Implementieren einer LAN-Vorrichtungsidentifizierungsmaßnahme gemäß einer überwachten LAN-Broadcast-Nachricht.

2. Verfahren zur Kommunikation für ein LAN gemäß Anspruch 1, wobei das Herstellen einer drahtlosen LAN-Verbindung durch die erste Vorrichtung und die zweite Vorrichtung gemäß den anfänglichen Hotspot-Informationen Folgendes umfasst;
Herstellen der drahtlosen LAN-Verbindung durch die erste Vorrichtung und die zweite Vorrichtung, die eine erste Hotspot-Verbindungsanforderung sendet, oder die zweite Vorrichtung gemäß den anfänglichen Hotspot-Informationen, die auf die anfänglichen Hotspot-Informationen antwortet.

3. Verfahren zur Kommunikation für LAN gemäß einem der Ansprüche 1 bis 2, wobei nach dem Herstellen einer drahtlosen LAN-Verbindung durch die erste Vorrichtung und die zweite Vorrichtung gemäß den anfänglichen Hotspot-Informationen das Verfahren ferner Folgendes umfasst:
Bestimmen, ob eine Hotspot-Informationsänderungsanforderung existiert, wobei die Hotspot-Informationsänderungsanforderung zumindest eines von Benutzernamenänderungsinformationen, Passwortänderungsinformationen und drahtlosen Netzwerkverschlüsselungsmodusänderungsinformationen umfasst;
Ändern der anfänglichen Hotspot-Informationen in aktualisierte Hotspot-Informationen gemäß der Hotspot-Informationsänderungsanforderung, wenn ein bestimmendes Ergebnis Ja ist;
Senden mittels des voreingestellten drahtgebundenen Kommunikationsmodus, der aktualisierten Hotspot-Informationen an jede zweite Vorrichtung, die mit der ersten Vorrichtung verbunden ist; und
Wiederherstellen einer drahtlosen LAN-Verbindung durch die erste Vorrichtung und die zweite Vorrichtung gemäß den aktualisierten Hotspot-Informationen.

4. Verfahren zur Kommunikation für ein LAN gemäß einem der Ansprüche 1 bis 3, wobei die LAN-Broadcast-Nachricht eine erste Vorrichtungsnachricht umfasst, die durch die zweite Vorrichtung als eine Antwort gesendet wird, nachdem die zweite Vorrichtung die erste zentrale Steuernachricht empfängt, die erste Vorrichtungsnachricht zweite Vorrichtungsinformationen der zweiten Vorrichtung umfassend; und das Implementieren einer LAN-Vorrichtungsidentifizierungsmaßnahme gemäß einer überwachten LAN-Broadcast-Nachricht Folgendes umfasst: Hinzufügen der zweiten Vorrichtungsinformationen, die in der ersten Vorrichtungsnachricht umfasst sind, zu einer ersten LAN-Vorrichtungsliste, falls die erste Vorrichtungsnachricht überwacht wird, die erste LAN-Vorrichtungsliste die ersten Vorrichtungsinformationen der ersten Vorrichtung und zweite Vorrichtungsinformationen jeder zweiten Vorrichtung umfassend, die die drahtlose LAN-Verbindung mit der ersten Vorrichtung herstellt; und/oder
wobei die LAN-Broadcast-Nachricht eine zweite Vorrichtungsnachricht umfasst, die zum ersten Mal gesendet wird, nachdem die zweite Vorrichtung die drahtlose LAN-Verbindung mit der ersten Vorrichtung hergestellt hat, die zweite Vorrichtungsnachricht zweite UDP-Daten und die zweiten Vorrichtungsinformationen der zweiten Vorrichtung umfassend; und das Implementieren einer LAN-Vorrichtungsidentifizierungsmaßnahme gemäß einer überwachten LAN-Broadcast-Nachricht Folgendes umfasst: Hinzufügen der zweiten Vorrichtungsinformationen, die in der zweiten Vorrichtungsnachricht umfasst sind, zu einer ersten LAN-Vorrichtungsliste, falls die zweite Vorrichtungsnachricht überwacht wird und Senden einer zweiten zentralen Steuernachricht als Antwort an die zweite Vorrichtung, das die zweite Vorrichtungsnachricht sendet, um die zweite Vorrichtung zu veranlassen, die ersten Vorrichtungsinformationen der ersten Vorrichtung, die in der zweiten zentralen Steuernachricht umfasst sind, zu einer zweiten LAN-Vorrichtungsliste hinzuzufügen, die erste LAN-Vorrichtungsliste und die zweite LAN-Vorrichtungsliste beide die ersten Vorrichtungsinformationen der ersten Vorrichtung und die zweiten Vorrichtungsinformationen jeder zweiten Vorrichtung umfassend, das die drahtlose LAN-Verbindung mit der ersten Vorrichtung herstellt; ferner wobei optional nach dem Implementieren einer LAN-Vorrichtungsidentifizierungsmaßnahme gemäß einer überwachten LAN-Broadcast-Nachricht das Verfahren ferner Folgendes umfasst: Überwachen von Änderungsinformationen der zweiten Vorrichtungen in der ersten LAN-Vorrichtungsliste; Löschen aus der ersten LAN-Vorrichtungsliste, wenn die Änderungsinformationen darstellen, dass die zweite Vorrichtung, die von der drahtlosen LAN-Verbindung zu der ersten Vorrichtung entfernt wurde, derzeit neu hinzugefügt wird, die zweite Vorrichtung, die von der drahtlosen LAN-Verbindung zu der ersten Vorrichtung entfernt wurde, die erste LAN-Vorrichtungsliste zu aktualisieren; und synchrones Senden der Änderungsinformationen an jede zweite Vorrichtung, die die drahtlose LAN-Verbindung mit der ersten Vorrichtung herstellt, um die zweite Vorrichtung zu veranlassen, gemäß den Änderungsinformationen die zweite Vorrichtung, die von der drahtlosen LAN-Verbindung zu der ersten Vorrichtung entfernt wurde, aus der zweiten LAN-Vorrichtungsliste synchron zu löschen.

5. Verfahren zur Kommunikation für ein LAN gemäß einem der Ansprüche 1 bis 4, wobei nach dem Herstellen einer drahtlosen LAN-Verbindung durch die erste Vorrichtung und jede zweite Vorrichtung gemäß den anfänglichen Hotspot-Informationen das Verfahren ferner Folgendes umfasst:
Bestimmen durch die erste Vorrichtung für eine beliebige zweite Vorrichtung, ob die Verbindung von der zweiten Vorrichtung zu trennen ist;
Zurückmelden mittels des voreingestellten drahtgebundenen Kommunikationsmodus, wenn das bestimmende Ergebnis Ja ist, von aktuellen Hotspot-Informationen des drahtlosen Zugriffs-Hotspots an die zweite Vorrichtung, die eine zweite Hotspot-Verbindungsanforderung sendet, nachdem die erste Vorrichtung eine zweite Hotspot-Verbindungsanforderung empfängt, die von der zweiten Vorrichtung mittels des voreingestellten drahtgebundenen Kommunikationsmodus gesendet wurde; und
Herstellen der drahtlosen LAN-Verbindung durch die erste Vorrichtung und die zweite Vorrichtung gemäß den aktuellen Hotspot-Informationen; und/oder
wobei der voreingestellte drahtgebundene Kommunikationsmodus eines oder mehrere von Ethernet-Kommunikation, Controller-Area-Network-, CAN-, Bus-Kommunikation und lokaler Interconnect-Network-, LIN-, Kommunikation umfasst.

6. Verfahren zur Kommunikation für ein lokales Netzwerk, LAN, das auf eine zweite Vorrichtung angewendet wird, das Verfahren umfassend:
Bestimmen mittels eines voreingestellten drahtgebundenen Kommunikationsmodus einer ersten Vorrichtung, die mit der zweiten Vorrichtung verbunden ist, wobei die erste Vorrichtung konfiguriert ist, einer beliebigen zweiten Vorrichtung einen drahtlosen Zugriffs-Hotspot bereitzustellen;
Empfangen von anfänglichen Hotspot-Informationen des drahtlosen Zugriffs-Hotspots, die von der ersten Vorrichtung mittels des voreingestellten drahtgebundenen Kommunikationsmodus gesendet werden, wobei die anfänglichen Hotspot-Informationen verwendet werden, um der ersten Vorrichtung zu ermöglichen, einer beliebigen zweiten Vorrichtung Authentifizierungsinformationen zum Zugreifen auf den drahtlosen Zugriffs-Hotspot bereitzustellen; und
Herstellen einer drahtlosen LAN-Verbindung durch die zweite Vorrichtung und die erste Vorrichtung gemäß den anfänglichen Hotspot-Informationen;
wobei nach dem Herstellen einer drahtlosen LAN-Verbindung durch die erste Vorrichtung und die zweite Vorrichtung gemäß den anfänglichen Hotspot-Informationen das Verfahren ferner Folgendes umfasst:
Empfangen einer ersten zentralen Steuernachricht von der ersten Vorrichtung, die erste zentrale Steuernachricht erste Benutzerdatagrammprotokoll-, UDP-, Daten und erste Vorrichtungsinformationen der ersten Vorrichtung umfassend;
Senden einer LAN-Broadcast-Nachricht an das drahtlose LAN als Reaktion auf die ersten UDP-Daten, die erste Vorrichtung in die Lage zu versetzen, eine LAN-Vorrichtungsidentifizierungsmaßnahme auf Grundlage der LAN-Broadcast-Nachricht zu implementieren.

7. Elektronische Vorrichtung, die konfiguriert ist, das Verfahren zur Kommunikation für ein LAN gemäß einem der Ansprüche 1 bis 5 durchzuführen, oder konfiguriert ist, das Verfahren zur Kommunikation für ein LAN gemäß Anspruch 6 durchzuführen;
wobei optional die elektronische Vorrichtung eine Anzeige ist.

8. Fahrzeug, umfassend die elektronische Vorrichtung gemäß Anspruch 7.

9. Kommunikationssystem für ein lokales Netzwerk, LAN, eine erste Vorrichtung und eine zweite Vorrichtung umfassend, wobei die erste Vorrichtung konfiguriert ist, die folgenden Schritte durchzuführen:
Erhalten zumindest einer zweiten Vorrichtung, die mit einer ersten Vorrichtung verbunden ist, mittels eines voreingestellten drahtgebundenen Kommunikationsmodus, wobei die erste Vorrichtung konfiguriert ist, einer beliebigen zweiten Vorrichtung einen drahtlosen Zugriffs-Hotspot bereitzustellen;
Senden von anfänglichen Hotspot-Informationen des drahtlosen Zugriffs-Hotspots an eine beliebige zweite Vorrichtung mittels des voreingestellten drahtgebundenen Kommunikationsmodus, wobei die anfänglichen Hotspot-Informationen zum Bereitstellen einer beliebigen zweiten Vorrichtung mit Authentifizierungsinformationen zum Zugreifen auf den drahtlosen Zugriffs-Hotspot verwendet werden; und
Herstellen einer drahtlosen LAN-Verbindung durch die erste Vorrichtung und die zweite Vorrichtung gemäß den anfänglichen Hotspot-Informationen; und
wobei die zweite Vorrichtung konfiguriert ist, die folgenden Schritte durchzuführen:
Bestimmen einer ersten Vorrichtung, die mit der zweiten Vorrichtung verbunden ist, mittels eines voreingestellten drahtgebundenen Kommunikationsmodus;
Empfangen der anfänglichen Hotspot-Informationen des drahtlosen Zugriffs-Hotspots, die durch die erste Vorrichtung mittels des voreingestellten drahtgebundenen Kommunikationsmodus gesendet werden; und
Herstellen einer drahtlosen LAN-Verbindung durch die zweite Vorrichtung und die erste Vorrichtung gemäß den anfänglichen Hotspot-Informationen;
wobei nach dem Herstellen einer drahtlosen LAN-Verbindung durch die erste Vorrichtung und die zweite Vorrichtung gemäß den anfänglichen Hotspot-Informationen die erste Vorrichtung ferner konfiguriert ist, die folgenden Schritte durchzuführen:
Senden einer ersten zentralen Steuernachricht an jede zweite Vorrichtung und Überwachen einer LAN-Broadcast-Nachricht in einem drahtlosen LAN, die erste zentrale Steuernachricht erste UDP-Daten und erste Vorrichtungsinformationen der ersten Vorrichtung umfassend, wobei die ersten UDP-Daten zum Auslösen einer beliebigen zweiten Vorrichtung verwendet werden, um die LAN-Broadcast-Nachricht an das drahtlose LAN zu senden; und
Implementieren einer LAN-Vorrichtungsidentifizierungsmaßnahme gemäß einer überwachten LAN-Broadcast-Nachricht.

10. Kommunikationssystem für ein LAN gemäß Anspruch 9, wobei das Herstellen einer drahtlosen LAN-Verbindung durch die erste Vorrichtung und die zweite Vorrichtung gemäß den anfänglichen Hotspot-Informationen Folgendes umfasst: Herstellen der drahtlosen LAN-Verbindung durch die erste Vorrichtung und die zweite Vorrichtung, die eine erste Hotspot-Verbindungsanforderung sendet, oder die zweite Vorrichtung gemäß den anfänglichen Hotspot-Informationen, die auf die anfänglichen Hotspot-Informationen antwortet; und/oder wobei nach dem Herstellen einer drahtlosen LAN-Verbindung durch die erste Vorrichtung und die zweite Vorrichtung gemäß den anfänglichen Hotspot-Informationen die erste Vorrichtung ferner konfiguriert ist, die folgenden Schritte durchzuführen: Bestimmen, ob eine Hotspot-Informationsänderungsanforderung existiert, wobei die Hotspot-Informationsänderungsanforderung zumindest eines von Benutzernamenänderungsinformationen, Passwortänderungsinformationen und drahtlosen Netzwerkverschlüsselungsmodusänderungsinformationen umfasst; Ändern der anfänglichen Hotspot-Informationen in aktualisierte Hotspot-Informationen gemäß der Hotspot-Informationsänderungsanforderung, wenn ein bestimmendes Ergebnis Ja ist; Senden der aktualisierten Hotspot-Informationen mittels des voreingestellten drahtgebundenen Kommunikationsmodus
an jede zweite Vorrichtung, die mit der ersten Vorrichtung verbunden ist; und Wiederherstellen einer drahtlosen LAN-Verbindung durch die erste Vorrichtung und die zweite Vorrichtung gemäß den aktualisierten Hotspot-Informationen.

11. Kommunikationssystem für ein LAN gemäß Anspruch 9 oder 10, wobei die LAN-Broadcast-Nachricht eine erste Vorrichtungsnachricht umfasst, die durch die zweite Vorrichtung als eine Antwort gesendet wird, nachdem die zweite Vorrichtung die erste zentrale Steuernachricht empfängt, die erste Vorrichtungsnachricht zweite Vorrichtungsinformationen der zweiten Vorrichtung umfassend; und das Implementieren einer LAN-Vorrichtungsidentifizierungsmaßnahme gemäß einer überwachten LAN-Broadcast-Nachricht Folgendes umfasst: Hinzufügen der zweiten Vorrichtungsinformationen, die in der ersten Vorrichtungsnachricht umfasst sind, zu einer ersten LAN-Vorrichtungsliste, falls die erste Vorrichtungsnachricht überwacht wird, die erste LAN-Vorrichtungsliste die ersten Vorrichtungsinformationen der ersten Vorrichtung und zweite Vorrichtungsinformationen jeder zweiten Vorrichtung umfassend, die die drahtlose LAN-Verbindung mit der ersten Vorrichtung herstellt; und/oder
wobei die LAN-Broadcast-Nachricht eine zweite Vorrichtungsnachricht umfasst, die ein erstes Mal gesendet wird, nachdem die zweite Vorrichtung die drahtlose LAN-Verbindung mit der ersten Vorrichtung hergestellt hat, die zweite Vorrichtungsnachricht zweite UDP-Daten und die zweiten Vorrichtungsinformationen der zweiten Vorrichtung umfassend; und das Implementieren einer LAN-Vorrichtungsidentifizierungsmaßnahme gemäß einer überwachten LAN-Broadcast-Nachricht Folgendes umfasst: Hinzufügen der zweiten Vorrichtungsinformationen, die in der zweiten Vorrichtungsnachricht umfasst sind, zu einer ersten LAN-Vorrichtungsliste, wenn die zweite Vorrichtungsnachricht überwacht wird, und Senden einer zweiten zentralen Steuernachricht als eine Antwort an die zweite Vorrichtung, die die zweite Vorrichtungsnachricht sendet, um die zweite Vorrichtung zu veranlassen, die ersten Vorrichtungsinformationen der ersten Vorrichtung hinzuzufügen, die in der zweiten zentralen Steuernachricht an eine zweite LAN-Vorrichtungsliste umfasst sind, die erste LAN-Vorrichtungsliste und die zweite LAN-Vorrichtungsliste beide die ersten Vorrichtungsinformationen der ersten Vorrichtung und die zweiten Vorrichtungsinformationen jeder zweiten Vorrichtung umfassend, die die drahtlose LAN-Verbindung mit der ersten Vorrichtung herstellt; ferner wobei optional nach dem Implementieren einer LAN-Vorrichtungsidentifizierungsmaßnahme gemäß einer überwachten LAN-Broadcast-Nachricht die erste Vorrichtung ferner konfiguriert ist, die folgenden Schritte durchzuführen: Überwachen von Änderungsinformationen der zweiten Vorrichtung in der ersten LAN-Vorrichtungsliste; Löschen aus der ersten LAN-Vorrichtungsliste, wenn die Änderungsinformationen darstellen, dass die zweite Vorrichtung, die von der drahtlosen LAN-Verbindung zu der ersten Vorrichtung entfernt wurde, derzeit neu hinzugefügt wird, die zweite Vorrichtung, die von der drahtlosen LAN-Verbindung zu der ersten Vorrichtung entfernt wurde, die erste LAN-Vorrichtungsliste zu aktualisieren; und synchrones Senden der Änderungsinformationen an jede zweite Vorrichtung, die die drahtlose LAN-Verbindung mit der ersten Vorrichtung herstellt, um zu veranlassen, dass die zweite Vorrichtung die zweite Vorrichtung, die von der drahtlosen LAN-Verbindung zu der ersten Vorrichtung entfernt wurde, aus der zweiten LAN-Vorrichtungsliste gemäß den Änderungsinformationen synchron zu löschen.

12. Kommunikationssystem für ein LAN gemäß einem der Ansprüche 9 bis 11, wobei nach dem Herstellen einer drahtlosen LAN-Verbindung durch die erste Vorrichtung und jede zweite Vorrichtung gemäß den anfänglichen Hotspot-Informationen die erste Vorrichtung ferner konfiguriert ist, die folgenden Schritte durchzuführen: Bestimmen durch die erste Vorrichtung für eine beliebige zweite Vorrichtung, ob eine Verbindung von der zweiten Vorrichtung getrennt werden soll;
Zurückmelden mittels des voreingestellten drahtgebundenen Kommunikationsmodus, wenn das bestimmende Ergebnis Ja ist, von aktuellen Hotspot-Informationen des drahtlosen Zugriffs-Hotspots an die zweite Vorrichtung, die eine zweite Hotspot-Verbindungsanforderung sendet, nachdem die erste Vorrichtung eine zweite Hotspot-Verbindungsanforderung empfängt, die von der zweiten Vorrichtung mittels des voreingestellten drahtgebundenen Kommunikationsmodus gesendet wurde; und
Herstellen der drahtlosen LAN-Verbindung durch die erste Vorrichtung und die zweite Vorrichtung gemäß den aktuellen Hotspot-Informationen.

13. Kommunikationssystem für ein LAN gemäß einem der Ansprüche 9 bis 12, wobei der voreingestellte drahtgebundene Kommunikationsmodus eines oder mehrere von Ethernet-Kommunikation, CAN-Bus-Kommunikation und LIN-Kommunikation umfasst.

14. Computerlesbares Speichermedium, ein Computerprogramm speichernd, wobei, wenn das Computerprogramm durch einen Prozessor ausgeführt wird, das Verfahren zur Kommunikation für ein LAN gemäß einem der Ansprüche 1 bis 5 implementiert wird; oder, wenn das Computerprogramm durch den Prozessor ausgeführt wird, das Verfahren zur Kommunikation für ein LAN gemäß Anspruch 6 implementiert wird.

## Revendications

1. Procédé de communication pour un réseau local, LAN, appliqué à un premier dispositif, le procédé comprenant :
l'obtention d'au moins un second dispositif connecté à un premier dispositif au moyen d'un mode de communication filaire prédéfini, le premier dispositif étant configuré pour fournir un point d'accès sans fil à tout second dispositif ;
l'envoi d'informations de point d'accès initiales du point d'accès sans fil à tout second dispositif au moyen du mode de communication filaire prédéfini, les informations de point d'accès initiales étant utilisées pour fournir à tout second dispositif des informations d'authentification permettant d'accéder au point d'accès sans fil ; et
l'établissement, au moyen du premier dispositif et du second dispositif, d'une connexion LAN sans fil conformément aux informations de point d'accès initiales ;
après l'établissement, au moyen du premier dispositif et du second dispositif, d'une connexion LAN sans fil conformément aux informations de point d'accès initiales, ledit procédé comprenant en outre :
la diffusion d'un premier message de commande centrale à chaque second dispositif, et la surveillance d'un message de diffusion par LAN dans un LAN sans fil, le premier message de commande centrale comprenant des premières données de protocole de datagramme d'utilisateur, UDP, et des informations de premier dispositif du premier dispositif, les premières données d'UDP étant utilisées pour déclencher tout second dispositif afin d'envoyer le message de diffusion par LAN au LAN sans fil ; et
la mise en œuvre d'une mesure d'identification de dispositif LAN conformément à un message de diffusion par LAN surveillé.

2. Procédé de communication pour un LAN selon la revendication 1, ledit établissement, au moyen du premier dispositif et du second dispositif, d'une connexion LAN sans fil conformément aux informations de point d'accès initiales comprenant :
l'établissement, au moyen du premier dispositif et du second dispositif qui envoie une première demande de connexion de point d'accès ou du second dispositif qui répond aux informations de point d'accès initiales, de la connexion LAN sans fil conformément aux informations de point d'accès initiales.

3. Procédé de communication pour un LAN selon l'une quelconque des revendications 1 à 2, après l'établissement, au moyen du premier dispositif et du second dispositif, d'une connexion LAN sans fil conformément aux informations de point d'accès initiales, ledit procédé comprenant en outre :
la détermination pour savoir si une demande de modification d'informations de point d'accès existe, ladite demande de modification d'informations de point d'accès comprenant au moins les unes parmi les informations de modification de nom d'utilisateur, les informations de modification de mot de passe et les informations de modification de mode de cryptage de réseau sans fil ;
la modification des informations de point d'accès initiales en informations de point d'accès mises à jour conformément à la demande de modification d'informations de point d'accès lorsque le résultat de détermination est oui ;
l'envoi, au moyen du mode de communication filaire prédéfini, des informations de point d'accès mises à jour à chaque second dispositif connecté au premier dispositif ; et
le rétablissement, au moyen du premier dispositif et du second dispositif, d'une connexion LAN sans fil conformément aux informations de point d'accès mises à jour.

4. Procédé de communication pour un LAN selon l'une quelconque des revendications 1 à 3,
ledit message de diffusion par LAN comprenant un premier message de dispositif diffusé par le second dispositif en tant que réponse après que le second dispositif ait reçu le premier message de commande centrale,
ledit premier message de dispositif comprenant des informations de second dispositif du second dispositif ; et
la mise en œuvre d'une mesure d'identification de dispositif LAN conformément à un message de diffusion par LAN surveillé comprenant : l'ajout des informations de second dispositif comprises dans le premier message de dispositif à une première liste de dispositifs LAN si le premier message de dispositif est surveillé, la première liste de dispositifs LAN comprenant les informations de premier dispositif du premier dispositif et les informations de second dispositif de chaque second dispositif qui établit la connexion LAN sans fil avec le premier dispositif ; et/ou
ledit message de diffusion par LAN comprenant un second message de dispositif qui est diffusé une première fois après que le second dispositif ait établi la connexion LAN sans fil avec le premier dispositif, ledit second message de dispositif comprenant des secondes données d'UDP et les informations de second dispositif du second dispositif ; et la mise en œuvre d'une mesure d'identification de dispositif LAN conformément à un message de diffusion par LAN surveillé comprenant : l'ajout des informations de second dispositif comprises dans le second message de dispositif à une première liste de dispositifs LAN si le second dispositif est surveillé, et la diffusion d'un second message de commande centrale en réponse au second dispositif qui diffuse le second message de dispositif, pour amener le second dispositif à ajouter les informations de premier dispositif du premier dispositif comprises dans le second message de commande centrale à une seconde liste de dispositifs LAN, ladite première liste de dispositifs LAN et ladite seconde liste de dispositifs LAN comprenant toutes deux les informations de premier dispositif du premier dispositif et les informations de second dispositif de chaque second dispositif qui établit la connexion LAN sans fil avec le premier dispositif ; en outre, éventuellement, après la mise en œuvre d'une mesure d'identification de dispositif LAN conformément à un message de diffusion par LAN surveillé, ledit procédé comprenant en outre : la surveillance des informations de changement des seconds dispositifs dans la première liste de dispositifs LAN ; la suppression, de la première liste de dispositifs LAN lorsque les informations de changement indiquent que le second dispositif qui est supprimé de la connexion LAN sans fil jusqu'au premier dispositif est nouvellement ajouté couramment, le second dispositif qui est supprimé de la connexion LAN sans fil jusqu'au premier dispositif, pour mettre à jour la première liste de dispositifs LAN ; et la diffusion synchrone des informations de changement vers chaque second dispositif qui établit la connexion LAN sans fil avec le premier dispositif, pour amener le second dispositif à supprimer de manière synchrone, de la seconde liste de dispositifs LAN conformément aux informations de changement, le second dispositif qui est supprimé de la connexion LAN sans fil jusqu'au premier dispositif.

5. Procédé de communication pour un LAN selon l'une quelconque des revendications 1 à 4, après l'établissement, au moyen du premier dispositif et de chaque second dispositif, d'une connexion LAN sans fil conformément aux informations de point d'accès initiales, ledit procédé comprenant en outre :
la détermination, au moyen du premier dispositif pour tout second dispositif, pour savoir s'il faut se déconnecter du second dispositif ;
l'alimentation, au moyen du mode de communication filaire prédéfini lorsque le résultat de détermination est oui, d'informations de point d'accès courantes de retour du point d'accès sans fil jusqu'au second dispositif qui envoie une seconde demande de connexion de point d'accès après que le premier dispositif ait reçu une seconde demande de connexion de point d'accès envoyée par le second dispositif au moyen du mode de communication filaire prédéfini ; et
l'établissement, au moyen du premier dispositif et du second dispositif, de la connexion LAN sans fil conformément aux informations de point d'accès courantes ; et/ou
ledit mode de communication filaire prédéfini comprenant une ou plusieurs communications parmi une communication Ethernet, une communication de bus de réseau de zone de contrôleur, CAN, et une communication de réseau d'interconnexion local, LIN.

6. Procédé de communication pour un réseau local, LAN, appliqué à un second dispositif, le procédé comprenant :
la détermination d'un premier dispositif connecté au second dispositif au moyen d'un mode de communication filaire prédéfini, ledit premier dispositif étant configuré pour fournir un point d'accès sans fil à tout second dispositif ;
la réception d'informations de point d'accès initiales du point d'accès sans fil envoyées par le premier dispositif au moyen du mode de communication filaire prédéfini, lesdites informations de point d'accès initiales étant utilisées pour permettre au premier dispositif de fournir à tout second dispositif des informations d'authentification permettant d'accéder au point d'accès sans fil ; et
l'établissement, au moyen du second dispositif et du premier dispositif, d'une connexion LAN sans fil conformément aux informations de point d'accès initiales ;
après l'établissement, au moyen du premier dispositif et du second dispositif, d'une connexion LAN sans fil conformément aux informations de point d'accès initiales, ledit procédé comprenant en outre :
la réception d'un premier message de commande centrale en provenance du premier dispositif, le premier message de commande centrale comprenant des premières données de protocole de datagramme d'utilisateur, UDP, et des informations de premier dispositif du premier dispositif ;
l'envoi d'un message de diffusion par LAN au LAN sans fil en réponse aux premières données d'UDP pour permettre au premier dispositif de mettre en œuvre une mesure d'identification de dispositif LAN sur la base du message de diffusion par LAN.

7. Dispositif électronique, configuré pour mettre en œuvre le procédé de communication pour un LAN selon l'une quelconque des revendications 1 à 5, ou configuré pour mettre en œuvre le procédé de communication pour un LAN selon la revendication 6 ;
éventuellement ledit dispositif électronique étant un écran.

8. Véhicule, comprenant le dispositif électronique selon la revendication 7.

9. Système de communication pour un réseau local, LAN, comprenant un premier dispositif et un second dispositif, le premier dispositif étant configuré pour effectuer les étapes suivantes :
l'obtention d'au moins un second dispositif connecté à un premier dispositif au moyen d'un mode de communication filaire prédéfini, le premier dispositif étant configuré pour fournir un point d'accès sans fil à tout second dispositif ;
l'envoi d'informations de point d'accès initiales du point d'accès sans fil à tout second dispositif au moyen du mode de communication filaire prédéfini, les informations de point d'accès initiales étant utilisées pour fournir à tout second dispositif des informations d'authentification permettant d'accéder au point d'accès sans fil ; et
l'établissement, au moyen du premier dispositif et du second dispositif, d'une connexion LAN sans fil conformément aux informations de point d'accès initiales ; et
le second dispositif étant configuré pour effectuer les étapes suivantes :
la détermination d'un premier dispositif connecté au second dispositif au moyen d'un mode de communication filaire prédéfini ;
la réception des informations de point d'accès initiales du point d'accès sans fil envoyées par le premier dispositif au moyen du mode de communication filaire prédéfini ; et
l'établissement, au moyen du second dispositif et du premier dispositif, d'une connexion LAN sans fil conformément aux informations de point d'accès initiales ;
après l'établissement, au moyen du premier dispositif et du second dispositif, d'une connexion LAN sans fil conformément aux informations de point d'accès initiales, ledit premier dispositif étant en outre configuré pour effectuer les étapes suivantes :
la diffusion d'un premier message de commande centrale à chaque second dispositif, et la surveillance d'un message de diffusion par LAN dans un LAN sans fil, le premier message de commande centrale comprenant des premières données d'UDP et des informations de premier dispositif du premier dispositif, les premières données d'UDP étant utilisées pour déclencher tout second dispositif afin d'envoyer le message de diffusion par LAN au LAN sans fil ; et
la mise en œuvre d'une mesure d'identification de dispositif LAN conformément à un message de diffusion par LAN surveillé.

10. Système de communication pour un LAN selon la revendication 9, ledit établissement, au moyen du premier dispositif et du second dispositif, d'une connexion LAN sans fil conformément aux informations de point d'accès initiales comprenant : l'établissement, au moyen du premier dispositif et du second dispositif qui envoie une première demande de connexion de point d'accès ou du second dispositif qui répond aux informations de point d'accès initiales, de la connexion LAN sans fil conformément aux informations de point d'accès initiales ; et/ou
après l'établissement, au moyen du premier dispositif et du second dispositif, d'une connexion LAN sans fil conformément aux informations de point d'accès initiales, ledit premier dispositif étant en outre configuré pour effectuer les étapes suivantes : la détermination pour savoir si une demande de modification d'informations de point d'accès existe, ladite demande de modification d'informations de point d'accès comprenant au moins les unes parmi les informations de modification de nom d'utilisateur, les informations de modification de mot de passe et les informations de modification de mode de cryptage de réseau sans fil ; la modification des informations de point d'accès initiales en informations de point d'accès mises à jour conformément à la demande de modification d'informations de point d'accès lorsque le résultat de détermination est oui ; l'envoi, au moyen du mode de communication filaire prédéfini, des informations de point d'accès mises à jour à chaque second dispositif connecté au premier dispositif ; et le rétablissement, au moyen du premier dispositif et du second dispositif, d'une connexion LAN sans fil conformément aux informations de point d'accès mises à jour.

11. Système de communication pour un LAN selon la revendication 9 ou 10,
ledit message de diffusion par LAN comprenant un premier message de dispositif diffusé par le second dispositif en tant que réponse après que le second dispositif ait reçu le premier message de commande central, le premier message de dispositif comprenant des informations de second dispositif du second dispositif ; et la mise en œuvre d'une mesure d'identification de dispositif LAN conformément à un message de diffusion par LAN surveillé comprenant : l'ajout des informations de second dispositif comprises dans le premier message de dispositif à une première liste de dispositifs LAN si le premier message de dispositif est surveillé, la première liste de dispositifs LAN comprenant les informations de premier dispositif du premier dispositif et les informations de second dispositif de chaque second dispositif qui établit la connexion LAN sans fil avec le premier dispositif ; et/ou
ledit message de diffusion par LAN comprenant un second message de dispositif qui est diffusé une première fois après que le second dispositif ait établi la connexion LAN sans fil avec le premier dispositif, le second message de dispositif comprenant des secondes données d'UDP et les informations de second dispositif du second dispositif ; et la mise en œuvre d'une mesure d'identification de dispositif LAN conformément à un message de diffusion par LAN surveillé comprend : l'ajout des informations de second dispositif comprises dans le second message de dispositif à une première liste de dispositifs LAN si le second message de dispositif est surveillé, et la diffusion d'un second message de commande centrale en tant que réponse au second dispositif qui diffuse le second message de dispositif, pour amener le second dispositif à ajouter les informations de premier dispositif du premier dispositif comprises dans le second message de commande centrale à une seconde liste de dispositifs LAN, la première liste de dispositifs LAN et la seconde liste de dispositifs LAN comprenant toutes deux les informations de premier dispositif du premier dispositif et les informations de second dispositif de chaque second dispositif qui établit la connexion LAN sans fil avec le premier dispositif ; en outre, éventuellement, après la mise en œuvre d'une mesure d'identification de dispositif LAN conformément à un message de diffusion par LAN surveillé, le premier dispositif est en outre configuré pour effectuer les étapes suivantes : la surveillance des informations de changement des seconds dispositifs dans la première liste de dispositifs LAN ; la suppression, de la première liste de dispositifs LAN lorsque les informations de changement indiquent que le second dispositif qui est supprimé de la connexion LAN sans fil jusqu'au premier dispositif est nouvellement ajouté couramment, le second dispositif qui est supprimé de la connexion LAN sans fil jusqu'au premier dispositif, pour mettre à jour la première liste de dispositifs LAN ; et
la diffusion synchrone des informations de changement à chaque second dispositif qui établit la connexion LAN sans fil avec le premier dispositif, pour amener le second dispositif à supprimer de manière synchrone, de la seconde liste de dispositifs LAN conformément aux informations de changement, le second dispositif qui est supprimé de la connexion LAN sans fil jusqu'au premier dispositif.

12. Système de communication pour un LAN selon l'une quelconque des revendications 9 à 11, après l'établissement, au moyen du premier dispositif et de chaque second dispositif, d'une connexion LAN sans fil conformément aux informations de point d'accès initiales, le premier dispositif étant en outre configuré pour effectuer les étapes suivantes :
la détermination, au moyen du premier dispositif pour tout second dispositif, pour savoir s'il faut se déconnecter du second dispositif ;
l'alimentation, au moyen du mode de communication filaire prédéfini lorsque le résultat de détermination est oui, des informations de point d'accès courantes de retour du point d'accès sans fil jusqu'au second dispositif qui envoie une seconde demande de connexion de point d'accès après que le premier dispositif ait reçu une seconde demande de connexion de point d'accès envoyée par le second dispositif au moyen du mode de communication filaire prédéfini ; et
l'établissement, au moyen du premier dispositif et du second dispositif, de la connexion LAN sans fil conformément aux informations de point d'accès courantes.

13. Système de communication pour un LAN selon l'une quelconque des revendications 9 à 12, ledit mode de communication filaire prédéfini comprenant une ou plusieurs communications parmi une communication Ethernet, une communication de bus de CAN et une communication de LIN.

14. Support de stockage lisible par ordinateur, stockant un programme informatique, lorsque ledit programme informatique est exécuté par un processeur, ledit procédé de communication pour un LAN selon l'une quelconque des revendications 1 à 5 étant mis en œuvre ; ou lorsque ledit programme informatique est exécuté par le processeur, ledit procédé de communication pour un LAN selon la revendication 6 étant mis en œuvre.
